# EUROPÄISCHE PATENTSCHRIFT

(11) **EP 2 815 127 B1**
(45) Veröffentlichungstag und Bekanntmachung des Hinweises auf die Patenterteilung: **20.12.2017**
(21) Anmeldenummer: 13713725.3
(22) Anmeldetag: 07.02.2013
(51) Int. Cl.: F04C 2/12, F16J 15/34, F16J 15/36, F04C 15/00

(54) **DREHKOLBENPUMPE**
ROTARY PISTON PUMP
POMPE À PISTONS ROTATIFS

(30) Priorität: 17.02.2012 DE 102012003067
(43) Veröffentlichungstag der Anmeldung: 24.12.2014
(73) Patentinhaber: NETZSCH Pumpen & Systeme GmbH, 95100 Selb (DE)
(72) Erfinder: WEIGL, Stefan, 84453 Mühldorf (DE); DENK, Reinhard, 84453 Mühldorf (DE); KAMAL, Hisham, 84478 Waldkraiburg (DE); STRASSL, Josef, 94315 Straubing (DE); KURZ, Robert, 85609 Aschheim (DE); MURRENHOFF, Bernhard, 84428 Buchbach (DE); BOEHME, Thomas, 84478 Waldkraiburg (DE); HERR, Gunther, 96253 Haarth (DE); KNEIDL, Franz, 84478 Waldkraiburg (DE); TEKNEYAN, Mikael, 84559 Kraiburg a. Inn (DE); GRADL, Matthias, 96145 Seßlach (DE); WEBER, Erwin, 81679 München (DE); WILLIS, Roger, 84562 Mettenheim (DE); KERN, Stefan, 83527 Haag (DE); KREIDL, Johann, 84478 Waldkraiburg (DE); VERHOEVEN, Marcel, Hailsham East Sussex BN27 3HS (GB); SCHMITT, Thomas, 84513 Töging am Inn (DE)
(86) Internationale Anmeldenummer: PCT/DE2013/100044
(87) Internationale Veröffentlichungsnummer: WO 2013/120483

(56) Entgegenhaltungen:
- EP-A1- 0 577 064
- EP-A1- 0 799 998
- EP-A1- 1 329 635
- US-A1- 2009 304 540

## Beschreibung

Die vorliegende Erfindung bezieht sich auf eine Drehkolbenpumpe mit mindestens zwei gegensinnig umlaufenden zwei- oder mehrflügeligen Drehkolben deren Antriebswellen Dichtungen aufweisen.

Aus der deutschen Offenlegungsschrift 198 06 657 geht eine Drehkolbenpumpe hervor, die zwei Antriebswellen für die Rotation der Rotoren zeigt. Beide Antriebswellen sind an ihrem Ende im Pumpenraum mit Schraubverbindungen versehen, mittels derer die Rotoren an den Antriebswellen befestigt sind. Beide Antriebswellen sind in einem Stück gefertigt und verbleiben während der Montage oder Demontage der Rotoren im Pumpengehäuse. Damit die Montagearbeiten erleichtert werden ist eine der Antriebswellen über eine Kupplung mit dem Antrieb verbunden und lässt sich somit im entkuppelten Zustand frei gegenüber der anderen Antriebswelle drehen.

Die Patentschrift US 6,283,740 B3 offenbart eine Drehkolbenpumpe mit einer verbesserten Abdichtung die zwischen dem Rotor und dem Außendurchmesser der Welle montiert ist. Es ist ein Adapter für die Antriebswelle vorgesehen, mit welchem die Antriebswelle leicht an eine Vielzahl von Antriebsmechanismen gekoppelt werden kann. Der Adapter kann durch einen alternativen Adapter ersetzt werden um alternative Antriebe anpassen zu können.

Die Patentanmeldung US 2008/00381 138 A1 offenbart eine Drehkolbenpumpe mit einem Pumpenkörper, mit einer Antriebseinrichtung und mit einem äußeren Gehäuse, wobei das Gehäuse mit einem Einsatz Versehen ist. Der Einsatz umfasst ein Gehäuse aus einem Kunststoffmaterial und ist mit einer Einlassöffnung und einer Auslassöffnung versehen. Das Gehäuse weist Öffnungen auf, durch welche die Rotoren drehbar angetrieben werden können, so dass die Rotoren ineinandergreifen und so ein Fluid von der Einlassöffnung zu der Auslassöffnung pumpen.

Die europäische Patentanmeldung EP 0 799 998 A1 offenbart eine Pumpe, insbesondere eine Drehkolbenpumpe, mit mindestens einem in einer Pumpenkammer drehenden Rotor. Der Rotor ist auf ein in die Pumpenkammer ragendes Ende einer Antriebswelle aufschiebbar und dadurch gekennzeichnet, dass eine magnetische Kraft den Rotor oder ein mit dem Rotor verbundenes Teil in seiner axialen Lage hält. Die magnetische Kraft verhindert, dass der Rotor oder das mit dem Rotor verbundene Teil gegen einen Anschlag drückt, der eine Verschiebung des Rotors auf der Antriebswelle in axialer Richtung bewirkt.

Die amerikanische Patentanmeldung US 2009/0304540 A1 offenbart eine Drehkolbenpumpe bei denen der Antrieb und die Antriebswelle von den Rotoren entfernbar sind. Die Rotoren sind in einem so genannten Pumpen- oder Rotorgehäuse angeordnet, welches sich sandwichartig zwischen der Abdeckung und der Lagerung befindet. Die Antriebswellen sind durch Gleitringdichtungen geschoben, welche ebenfalls sandwichartig zwischen der Lagerung und dem ersten beziehungsweise zweiten Rotor angeordnet sind. Die Gleitringdichtungen können einfach entnommen werden, in dem die Rotoren entfernt werden.

Die Aufgabe der vorliegenden Erfindung gegenüber dem vorgenannten Stand der Technik besteht darin, eine Drehkolbenpumpe bereit zu stellen, bei welcher der Ein- und Ausbau der Drehkolben und der Gleitringdichtung optimiert ist..

Diese Aufgabe wird hinsichtlich der mechanischen Gestaltung der Drehkolbenpumpe durch die Merkmale der Anspruchs 1 gelöst.

In Bezug auf die mit der Erfindung zu lösende Aufgabe hinsichtlich des Einbaus und der Synchronisierung der Drehkolben wird auf die Merkmale des Verfahrensanspruchs 12 verwiesen.

Vorteilhafte Gestaltungsmöglichkeiten der Erfindung sind den Unteransprüchen zu finden.

Es wird eine Drehkolbenpumpe mit mindestens zwei gegensinnig umlaufenden zwei- oder mehrflügeligen Drehkolben offenbart, deren Antriebswellen jeweils eine Dichtung aufweisen. Die Dichtungen sind jeweils auf einem, zum jeweiligen Drehkolben, gehörenden Wellenansatz angeordnet. Diese Wellenansätze sind hohl gebohrt und/oder geformt und sind fest mit dem jeweiligen Drehkolben verbunden. Die Dichtungen, die auf die Wellenansätze aufgebracht werden sind mit einer Arretierungseinrichtung versehen, wobei jede Arretierungseinrichtung eine Vielzahl von Fixierungspositionen am Gehäuse der Dichtung aufweist.

Die erfindungsgemäße Arretierungseinrichtung ist ein Ring, der mit dem Gehäuse der Dichtung in Verbindung steht. Weiterhin weist die Arretierungseinrichtung mehrere parallel zur Drehkolbenachse verlaufende Axialnuten auf. Diese Axialnuten erstrecken sich über den gesamten Umfang der ringförmigen Arretierungseinrichtung und sind in einem gleichmäßigen Abstand zueinander auf der ringförmigen Arretierungseinrichtung angeordnet. Es ist auch möglich, dass die Axialnuten nur einen Teilbereich des Umfanges der ringförmigen Arretierungseinrichtung abdecken. Vorzugsweise wird eine Konstellation gewählt, in der zweimal einen Teilbereich von 45 Grad abgedeckt wird. Durch diese Konstellation ist es möglich, dass je ein Sicherungselement in einen der zwei 45 Grad Bereiche eingreift und hier in jeweils eine Axialnut eingreift. Die Axialnuten sind angefast, sodass die Sicherungselemente ideal einrasten können. Weiterhin wird durch die Anfasung ein schnelleres und sicheres Einrasten der Sicherungselemente in die Axialnuten ermöglicht.

In einer bevorzugten Ausführungsform sind die Axialnuten nicht vollständig in die Arretierungseinrichtung eingebracht, sondern weisen einen Steg auf, der dazu gedacht ist, ein Sicherungselement von der Dichtung selber zu beabstanden. Die hintere Stirnfläche der Arretierungseinrichtung bildet einen axialen Anschlag, der mit der Rückseite des Pumpengehäuses eine Wirkpaarung bildet. Durch das Zusammenwirken von Arretierungseinrichtung und Rückseite des Pumpengehäuses wir die Gleitringdichtung mit einer gewünschten Vorspannung beaufschlagt.

Weiterhin ist es möglich in den Innendurchmesser der Gleitringdichtung frei zu lassen, so dass die Gleitringdichtung frei auf dem Wellenansatz liegt. In einer ergänzenden Ausführungsform wird im Innendurchmesser der Gleitringdichtung eine Lippendichtung oder eine zweite Gleitringdichtung angeordnet.

Für den Fachmann ist klar, dass es viele Möglichkeiten gibt die Arretierungseinrichtung herzustellen und/oder auf die Gleitringdichtung aufzubringen. Die Arretierungseinrichtung kann ein Ring sein, der auf die Gleitringdichtung aufgebracht wird. In einer weiteren Ausführungsform wird die Arretierungseinrichtung, bei der Herstellung der Dichtung, gleich aus dem Dichtungsgehäuse herausgefrässt.

Den Axialnuten ist mindestens ein Sicherungselement zugeordnet, wobei das Sicherungselement in eine oder mehrere Axialnuten eingreift. Das Sicherungselement weist mindestens zwei Stifte und/oder Bolzen auf, welche in die Axialnuten eingreifen. In einer bevorzugten Ausführungsform besteht das Sicherungselement aus einem, sich annährend über 180°, um die Dichtung herum erstreckenden Ringelement. Weiterhin ist das Sicherungselement fest und/oder drehfest mit einem Teil des Gehäuses der Dichtung verbunden.

Die Dichtung kann eine Lippendichtung, eine Stopfbuchsendichtung oder in bevorzugter Weise eine Gleitringdichtung sein. Das Gehäuse, der als Gleitringdichtung ausgestalteten Dichtung, ist drehstarr mit einem Gleitring der Gleitringdichtung verbunden.

Über einen rohrförmigen Wellenansatz ist jeder Drehkolben mittels einer Klemmvorrichtung mit seiner jeweiligen Antriebswelle verbunden.

Weiterhin ist ein Verfahren zum Einbau von Dichtungen bei Drehkolbenpumpen offenbart. Hierbei wird die Dichtung auf einen rohrförmigen Wellenansatz, des Drehkolbens montiert. Anschließend werden die Drehkolben in das Pumpengehäuse eingeführt. Durch Verdrehen des jeweiligen Drehkolbens wird das Sicherungselement formschlüssig mit der Dichtung verbunden, wobei Stifte und/oder Bolzen in eine Arretierungseinrichtung eingreifen. Anschließend wird der rohrförmige Wellenansatz drehfest mit der jeweiligen Antriebswelle verbunden. Jeder Drehkolben wird somit, mittels seinem rohrförmigen Wellenansatz, kraftschlüssig und lösbar mit der Antriebswelle verbunden.

Durch die vorab beschriebene Anordnung der Dichtungen auf dem jeweiligen Wellenansatz der Drehkolben entsteht eine definierte Formation von Komponenten. Durch diese Komponentenformation ist gewährleistet, dass die Drehkolben immer mit dem richtigen Abstand zur Gehäuserückwand der Pumpenkammer eingebaut werden. In der Vergangenheit wurde dieser Abstand immer durch Messen und einstellen, beim Einbau der Drehkolben, sichergestellt. Diese frühere Methode erforderte ein enormes Geschick des Technikers und führte dazu, dass die Drehkolben während der Montage mehrfach ein und ausgebaut werden mussten.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine Gesamtansicht einer Drehkolbenpumpe
Figur 2 zeigt eine Teilansicht der Gleitringdichtung mit Drehkolben und Klemmvorrichtung
Figur 3 zeigt die Gleitringdichtung mit Axialnuten
Figuren 4 und 5 zeigen Gestaltungsmöglichkeiten der Sicherungselemente und des Aufnahmegehäuses

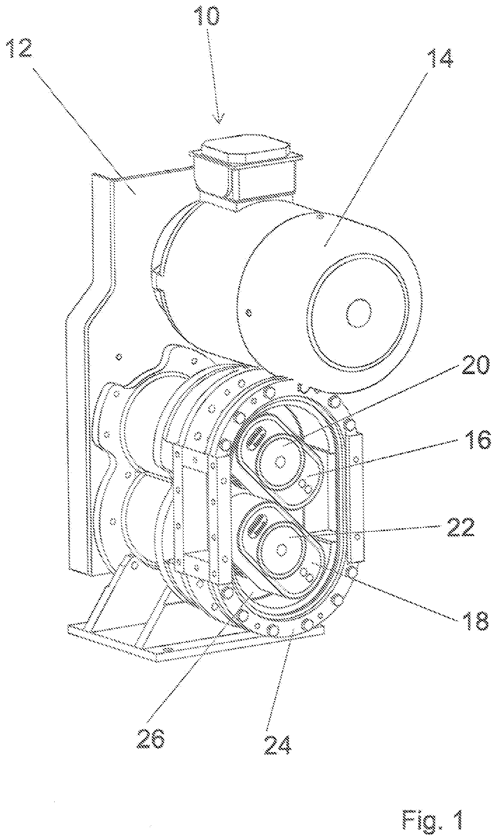

Eine Drehkolbenpumpe 10, wie in **Fig. 1** dargestellt, besteht im Wesentlichen aus einem Maschinenständer 12 an dem ein Motor 14 für den Antrieb von zwei Drehkolben 16,18 befestigt ist. Die beiden Drehkolben 16,18 werden zum Beispiel, wie hier aus dem Stand der Technik hervorgeht, mit Antriebswellen 20, 22 verbunden und rotieren in der dargestellten Formation gleichzeitig und gegensinnig um die Achsen der Antriebswellen 20, 22. Während der Rotation der Drehkolben kontaktieren die Drehkolben das Pumpengehäuse 24 und bilden somit ständig wiederkehrende Pumpenkammern 26, die das zu fördernde Produkt ansaugen und auf der gegenüberliegenden Seite der Pumpe ausstoßen. Nicht ersichtlich aber notwendig ist der Einsatz von Dichtungen, die die Umgebung gegenüber dem Pumpenraum abdichten.

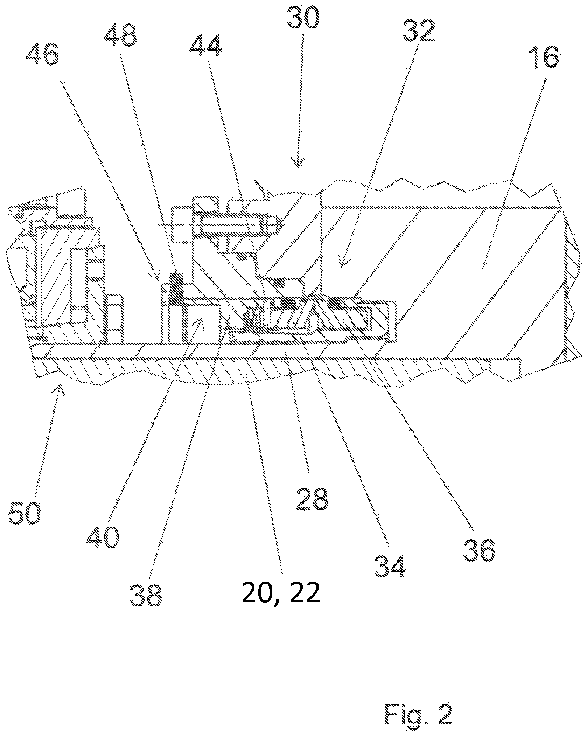

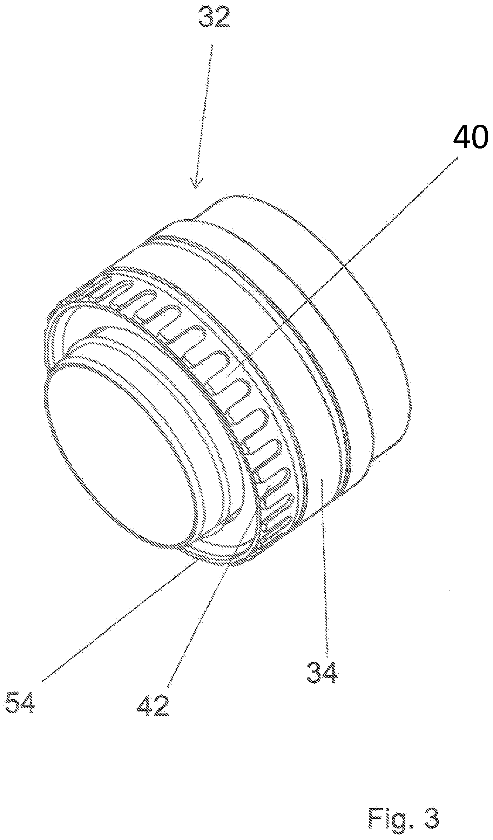

Der in Fig. 2 gezeigte Ausschnitt einer Drehkolbenpumpe zeigt einen Teil eines Drehkolbens 16 mit einem rohrförmigen Wellenansatz 28. Nach links vom Drehkolben 16 schließt sich das Aufnahmegehäuse 30 für die Gleitringdichtung 32 an. Die Gleitringdichtung 32 besteht aus dem Gehäuse 38, zwei Gleitringen 34, 36 sowie den dazugehörigen O-Ringen, die den Innenraum der Gleitringdichtung 32 gegen das Aufnahmegehäuse 30 der Gleitringdichtung 32 abdichten. Das Gehäuse 38 der Gleitringdichtung 32, das auch das Gehäuse 38 einer Lippendichtung oder Stopfbuchsenpackung sein kann, reicht über den eigentlichen Dichtungsbereich hinaus in entgegengesetzter Richtung zu dem Drehkolben 16. Dieser verlängerte Bereich des Gehäuses 38 bildet die Arretierungseinrichtung 40 dar, die eine Vielzahl von Fixierungspositionen bzw. Axialnuten 42 (siehe Fig. 3) aufweist. Der Teil des Gehäuses 38 der Gleitringdichtung 32 der sich außerhalb des Drehkolbens 16 befindet ist über einen Stift oder Bolzen 44 mit dem linken Gleitring 34 drehstarr verbunden.

Im Aufnahmegehäuse 30 für die Gleitringdichtung 32 befindet sich am äußersten Ende eine Ausnehmung 46, in die das Sicherungselement 48 eingreift. Das Sicherungselement 48 erstreckt sich radial über die Ausnehmung 46 hinaus bis in die Axialnuten 42 im Gehäuse 38 der Gleitringdichtung 32. Hier ist auch zu erkennen, wie das Sicherungselement 48 in die Arretierungseinrichtung 40 eingreift. Die Verbindung zwischen dem Aufnahmegehäuse 30 und dem Pumpengehäuse (nicht dargestellt) geschieht mittels Schrauben.

Der Wellenansatz 28 ist fest mit dem Drehkolben 16 in Verbindung und nimmt an seiner, an die Gleitringdichtung 30 angrenzenden Seite, eine Klemmvorrichtung 50 auf. Die Klemmvorrichtung 50 verbindet ebenfalls den Drehkolben 16 mit der Antriebswelle 20, 22. Die Klemmvorrichtung 50 arbeitet mechanisch über Bauteile mit konischen Flächen und führt bei der Betätigung von Schrauben zu einer Reduzierung des inneren Querschnitts der ringförmigen ineinandergreifenden Bauteile.

Die Erfindung bezieht sich nicht auf die inneren Bauteile der erfindungsgemäßen Dichtung/Gleitringdichtung 32 bzw. möglichen Dichtungsvarianten, sondern auf deren nach außen hin sichtbaren Teile. Speziell handelt es sich dabei um die in **Fig. 3** dargestellte Arretierungseinrichtung 40, die aus einem äußeren Ring 54 besteht, der seitlich an der Gleitringdichtung 32 angebracht ist. Dieser Ring 54 verfügt über, im gleichen Abstand voneinander angeordnete, Axialnuten 42, die ein freies offenes Ende haben damit das Sicherungselement (nicht dargestellt) mit seinen Stiften/Bolzen beim Einbringen der Drehkolben in das Pumpengehäuse in die Axialnuten 42 eingreifen kann. Dieser Eingriff bewirkt die Stillsetzung des Gleitrings 34 und sorgt somit für die gewünschte Abdichtung der Pumpenkammer. Obwohl in diesem Ausführungsbeispiel das Gehäuse 38 der Gleitringdichtung 32 für die Funktion der Gleitringdichtung 32 beschrieben wird, kann das Gehäuse 38 in seinem Innenraum auch eine Dichtung in der Form einer Stopfbuchsenpackung oder einer Lippendichtung aufnehmen. In diesen Ausführungsbeispielen hält das Sicherungselement das gesamte Dichtungspaket fest und dichtet den Wellenansatz und die Pumpenkammer ab.

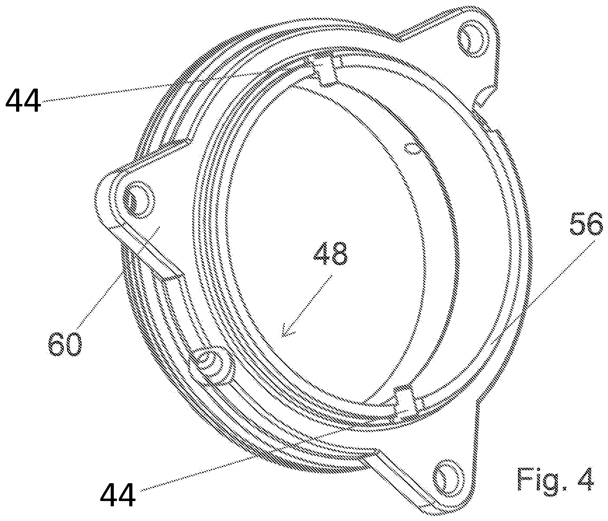

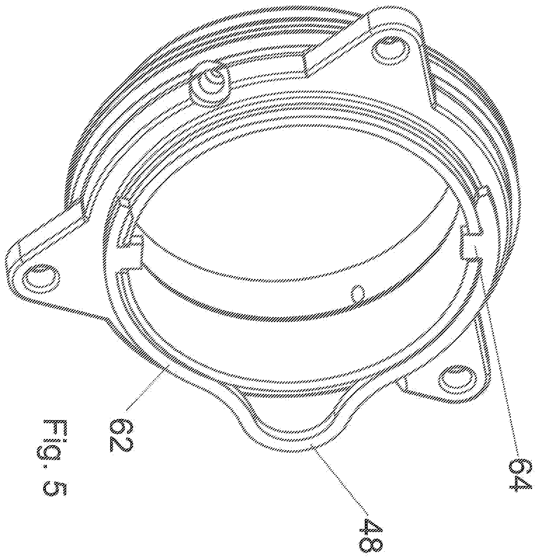

Die beiden **Fig. 4** und **Fig. 5** lassen verschiedene Gestaltungen des Sicherungselements 48 erkennen. Von **Fig. 4** ist dieses Sicherungselement 48 als ein Ringelement 56 zu entnehmen, das im Aufnahmegehäuse 30 der Gleitringdichtung sitzt. Das Ringelelement 56 weist Stifte oder Bolzen 44 auf, die in das Gehäuse der Gleitringdichtung eingreifen. Dieser Eingriff führt zur Stillsetzung des Gleitrings. Über die Bohrungen in den Ansätzen 60 werden die Bauteile des Aufnahmegehäuses miteinander verbunden. In einer weiteren Ausführungsform ist es möglich, die Stifte oder Bolzen 44 in dafür vorgesehenen Löcher (nicht dargestellt) des Aufnahmegehäuses 30 einzupressen.

Die Funktion der, in **Fig. 5**, dargestellten Ausführungsweise des Sicherungselementes 48 ist gleich dem in Fig. 4. Der Unterschied besteht lediglich in der Gestaltung der Elemente die zur Stillsetzung des Gleitrings führen. Dargestellt sind hier blockförmige Elemente 64, wobei es auch Keile oder gleichwirkende Gestaltungen sein können. Das Sicherungselement weist hier die Form einer halbkreisförmigen Spange 62 auf, die durch ihre Federungskraft auch für den sicheren Halt am Aufnahmegehäuse sorgt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichen

- 10: Drehkolbenpumpe
- 12: Maschinenständer
- 14: Motorr
- 16: Drehkolben
- 18: Drehkolben
- 20: Antriebswelle
- 22: Antriebswelle
- 24: Pumpengehäuse
- 26: Pumpenkammer
- 28: Wellenansatz
- 30: Aufnahmegehäuse
- 32: Dichtung
- 34: Gleitring
- 36: Gleitring
- 38: Gehäuse
- 40: Arretierungseinrichtung
- 42: Axialnut
- 44: Stift/Bolzen
- 46: Ausnehmung
- 48: Sicherungselement
- 50: Klemmvorrichtung
- 54: äußerer Ring
- 56: Ringelement
- 62: Ansatz
- 62: Spange
- 64: Element

## Patentansprüche

1. Drehkolbenpumpe (10) mit mindestens zwei gegensinnig umlaufenden zwei- oder mehrflügeligen Drehkolben (16, 18) deren Antriebswellen (20, 22) Dichtungen (32) aufweisen, wobei die Dichtungen (32) die jeweils auf einem zum jeweiligen Drehkolben (16, 18) gehörenden Wellenansatz (28) angeordnet sind, wobei jede Dichtung (32) mit einer Arretierungseinrichtung (40) versehen ist, die eine Vielzahl von Fixierungspositionen am Gehäuse (38) der Dichtung (32) aufweist **dadurch gekennzeichnet, dass** die Arretierungseinrichtung (40) ein Ring ist, der mit dem Gehäuse (38) für die Dichtungen (32) in Verbindung steht und der mehrere parallel zur Drehkolbenachse verlaufende Axialnuten (42) aufweist.

2. Drehkolbenpumpe (10) nach Anspruch 1, **dadurch gekennzeichnet, dass** sich die Axialnuten (42) über den gesamten Umfang der ringförmigen Arretierungseinrichtung (40) erstrecken.

3. Drehkolbenpumpe (10) nach Anspruch 2, **dadurch gekennzeichnet, dass** die Axialnuten (42) nur einen Teilbereich des Umfanges der ringförmigen Arretierungseinrichtung (42) abdecken, vorzugsweise zweimal einen Teilbereich von 45 Grad.

4. Drehkolbenpumpe (10) nach Anspruch 2 oder 3, **dadurch gekennzeichnet, dass** die Axialnuten (42) im gleichmäßigen Abstand zueinander auf der ringförmigen Arretierungseinrichtung (40) angeordnet sind.

5. Drehkolbenpumpe (10) nach einem der Ansprüche 1 bis 4, **dadurch gekennzeichnet, dass** den Axialnuten (42) ein Sicherungselement (48) zugeordnet ist, das in eine oder mehrere Axialnuten (42) eingreift.

6. Drehkolbenpumpe (10) nach Anspruch 5, **dadurch gekennzeichnet, dass** das Sicherungselement (48) mindestens zwei Stifte/Bolzen (44) aufweist, welche in die Axialnuten (42) eingreifen.

7. Drehkolbenpumpe (10) nach einem der Ansprüche 5 bis 6, **dadurch gekennzeichnet, dass** das Sicherungselement (48) aus einem sich annährend über 180°, um die Dichtung (32) herum erstreckenden Ringelement (56) besteht.

8. Drehkolbenpumpe (10) nach einem der Ansprüche 5 bis 7, **dadurch gekennzeichnet, dass** das Sicherungselement (48) fest mit einem Teil des Gehäuses (38) der Dichtung (32) verbunden ist.

9. Drehkolbenpumpe (10) nach einem der Ansprüche 1 bis 8, **dadurch gekennzeichnet, dass** die Dichtung (32) eine Lippendichtung, eine Stopfbuchsendichtung oder eine Gleitringdichtung ist.

10. Drehkolbenpumpe (10) nach Anspruch 9, **dadurch gekennzeichnet, dass** das Gehäuse (38) der als Gleitringdichtung ausgestalteten Dichtung (32) drehstarr mit einem Gleitring (34) verbunden ist.

11. Drehkolbenpumpe (10) nach einem der Ansprüche 1 bis 10, **dadurch gekennzeichnet, das** ein rohrförmiger Wellenansatz (28) der Drehkolben (16, 18) und die Antriebswellen (20, 22) mittels einer Klemmvorrichtung (50) verbunden sind.

12. Verfahren zum Einbau von Dichtungen (32) bei Drehkolbenpumpen (10), **dadurch gekennzeichnet, dass**
a. die Dichtung (32) auf einen rohrförmigen Wellenansatz (28) des Drehkolbens (16, 18) montiert wird,
b. die Drehkolben (16, 18) in das Pumpengehäuse (24) eingeführt werden,
c. durch Verdrehen des Drehkolbens (16, 18) ein Sicherungselement (48) formschlüssig mit der Dichtung (32) verbunden wird, wobei das Sicherungselement (48) Stifte oder Bolzen (44) aufweist, welche in eine Arretierungseinrichtung (40) eingreifen und wobei
d. der rohrförmige Wellenansatz (28) drehfest mit einer Antriebswelle (52) verbunden wird.

13. Verfahren nach Anspruch 12, **dadurch gekennzeichnet, dass** Drehkolben (16, 18) mit seinem rohrförmigen Wellenansatz (28) kraftschlüssig oder formschlüssig und lösbar mit der Antriebswelle (52) verbunden werden.

## Claims

1. A rotary piston pump (10) with at least two double- or multi-lobe rotary pistons (16, 18) rotating in opposite directions, the drive shafts (20, 22) whereof comprise seals (32), wherein the seals (32) are arranged in each case on a shaft shoulder (28) belonging to the respective rotary piston (16, 18), wherein each seal (32) is provided with a locking device (40), which comprises a multiplicity of fixing positions on the housing (38) of the seal (32), **characterised in that** the locking device (40) is a ring, which is connected to the housing (38) for the seals (32) and comprises a plurality of axial grooves (42) running parallel to the rotary piston axis.

2. The rotary piston pump (10) according to claim 1, **characterised in that** the axial grooves (42) extend over the entire periphery of the annular locking device (40).

3. The rotary piston pump (10) according to claim 2, **characterised in that** the axial grooves (42) cover only a partial region of the periphery of the annular locking device (42), preferably a partial region of 45 degrees two times.

4. The rotary piston pump (10) according to claim 2 or 3, **characterised in that** the axial grooves (42) are arranged at a uniform distance from one another on the annular locking device (40).

5. The rotary piston pump (10) according to any one of claims 1 to 4, **characterised in that** there is assigned to the axial grooves (42) a securing element (48) which engages in one or more axial grooves (42).

6. The rotary piston pump (10) according to claim 5, **characterised in that** the securing element (48) comprises at least two pins/bolts (44) which engage in the axial grooves (42).

7. The rotary piston pump (10) according to any one of claims 5 to 6, **characterised in that** the securing element (48) comprises an annular element (56) extending around the seal (32) approximately over 180°.

8. The rotary piston pump (10) according to any one of claims 5 to 7, **characterised in that** the securing element (48) is fixedly connected to a part of the housing (38) of the seal (32).

9. The rotary piston pump (10) according to any one of claims 1 to 8, **characterised in that** the seal (32) is a lip seal, a stuffing-box seal or a slip ring seal.

10. The rotary piston pump (10) according to claim 9, **characterised in that** the housing (38) of the seal (32) constituted as a slip ring seal is connected torsionally rigid to a slip ring (34).

11. The rotary piston pump (10) according to any one of claims 1 to 10, **characterised in that** a tubular shaft shoulder (28) of the rotary pistons (16, 18) and the drive shafts (20, 22) are connected by means of a clamping device (50).

12. A method for fitting seals (32) in rotary piston pumps (10), **characterised in that**
a. the seal (32) is mounted on a tubular shaft shoulder (28) of the rotary piston (16, 18),
b. the rotary pistons (16, 18) are introduced into the pump housing (24),
c. a securing element (48) is connected in a form-fit manner to the seal (32) by rotating the rotary piston (16, 18), wherein the securing element (48) comprises pins or bolts (44) which engage in a locking device (40) and wherein
d. the tubular shaft shoulder (28) is connected in a non-rotatable manner to a drive shaft (52).

13. The method according to claim 12, **characterised in that** rotary pistons (16, 18) are connected to a tubular shaft shoulder (28) in a friction-locked or form-fit manner and detachably to the drive shaft (52) .

## Revendications

1. Pompe à pistons rotatifs (10) comprenant au moins deux pistons rotatifs (16, 18) tournant en sens inverse, à deux ou plusieurs palettes, dont les arbres d'entraînement (20, 22) présentent des joints d'étanchéité (32), dans laquelle les joints d'étanchéité (32) sont disposés respectivement sur un épaulement d'arbre (28) appartenant au piston rotatif (16, 18) respectif, dans laquelle chaque joint d'étanchéité (32) est pourvu d'un dispositif d'arrêt (40) présentant une pluralité de positions de fixation sur le boîtier (38) du joint d'étanchéité (32), **caractérisée en ce que** le dispositif d'arrêt (40) est un anneau relié au boîtier (38) pour les joints d'étanchéité (32) et présentant plusieurs rainures axiales (42) s'étendant parallèlement à l'axe de piston rotatif.

2. Pompe à pistons rotatifs (10) selon la revendication 1, **caractérisée en ce que** les rainures axiales (42) s'étendent sur tout le pourtour du dispositif d'arrêt annulaire (40).

3. Pompe à pistons rotatifs (10) selon la revendication 2, **caractérisée en ce que** les rainures axiales (42) ne recouvrent qu'une zone partielle du pourtour du dispositif d'arrêt annulaire (40), de préférence deux fois une zone partielle de 45 degrés.

4. Pompe à pistons rotatifs (10) selon la revendication 2 ou 3, **caractérisée en ce que** les rainures axiales (42) sont disposées en respectant un espacement régulier entre elles sur le dispositif d'arrêt annulaire (40).

5. Pompe à pistons rotatifs (10) selon l'une des revendications 1 à 4, **caractérisée en ce qu'**un élément de sécurité (48) est attribué aux rainures axiales (42), lequel s'engage dans une ou plusieurs rainures axiales (42) .

6. Pompe à pistons rotatifs (10) selon la revendication 5, **caractérisée en ce que** l'élément de sécurité (48) présente au moins deux broches/boulons (44), lesquels s'engagent dans les rainures axiales (42).

7. Pompe à pistons rotatifs (10) selon l'une des revendications 5 à 6, **caractérisée en ce que** l'élément de sécurité (48) est constitué d'un élément annulaire (56) s'étendant sur approximativement 180° autour du joint d'étanchéité (32).

8. Pompe à pistons rotatifs (10) selon l'une des revendications 5 à 7, **caractérisée en ce que** l'élément de sécurité (48) est relié fixement à une partie du boîtier (38) du joint d'étanchéité (32).

9. Pompe à pistons rotatifs (10) selon l'une des revendications 1 à 8, **caractérisée en ce que** le joint d'étanchéité (32) est un joint à lèvre, un joint presse-garniture ou un joint mécanique.

10. Pompe à pistons rotatifs (10) selon la revendication 9, **caractérisée en ce que** le boîtier (38) du joint d'étanchéité (32) conçu comme un joint mécanique est relié à un anneau coulissant (34) de façon solidaire en rotation.

11. Pompe à pistons rotatifs (10) selon l'une des revendications 1 à 10, **caractérisée en ce qu'**un épaulement d'arbre tubulaire (28) des pistons rotatifs (16, 18) et les arbres d'entraînement (20, 22) sont reliés au moyen d'un dispositif de serrage (50).

12. Procédé pour l'installation de joints d'étanchéité (32) dans des pompes à pistons rotatifs (10), **caractérisé en ce que**
a. le joint d'étanchéité (32) est monté sur un épaulement d'arbre tubulaire (28) du piston rotatif (16, 18),
b. les pistons rotatifs (16, 18) sont introduits dans le boîtier de pompe (24),
c. une rotation du piston rotatif (16, 18) permet de relier un élément de sécurité (48) au joint d'étanchéité (32) par complémentarité de forme, l'élément de sécurité (48) présentant des broches ou des boulons (44) s'engageant dans un dispositif d'arrêt (40), et où
d. l'épaulement d'arbre tubulaire (28) est relié à un arbre d'entraînement (52) de façon solidaire en rotation.

13. Procédé selon la revendication 12, **caractérisé en ce que** le piston rotatif (16, 18) est relié à force ou par complémentarité de forme et de façon détachable à l'arbre d'entraînement (52) avec son épaulement d'arbre tubulaire (28).
